# EUROPEAN PATENT SPECIFICATION

(11) **EP 1 672 974 B1**
(45) Date of publication and mention of the grant of the patent: **29.04.2009**
(21) Application number: 04774977.5
(22) Date of filing: 30.09.2004
(51) Int. Cl.: A01G 3/00

(54) **DEVICE FOR SEPARATING OFF PARTS OF A PLANT BRANCH**
VORRICHTUNG ZUM ABTRENNEN VON TEILEN VON EINEM PFLANZENZWEIG
DISPOSITIF DE SEPARATION DES PARTIES D'UNE BRANCHE DE PLANTE

(30) Priority: 14.10.2003 NL 1024536
(43) Date of publication of application: 28.06.2006
(73) Proprietor: Rombomatic B.V., 5527 JT Hapert (NL)
(72) Inventor: ROMBOUTS, Peter, Karel, Maria, NL-5527 GL Hapert (NL); OLIJSLAGERS, Wilhelmus, Adrianus, Maria, NL-5271 VC St. Michielsgestel (NL); DONKERS, Antonius, Franciscus, Wilhelmus, NL-5467 LM Veghel (NL)
(74) Representative: Timmers, Cornelis Herman Johannes
(86) International application number: PCT/NL2004/000676
(87) International publication number: WO 2005/034609

(56) References cited:
- EP-A- 0 374 063
- EP-A- 0 406 132
- EP-A- 0 853 873
- WO-A-02/080657
- US-A- 5 370 713
- PATENT ABSTRACTS OF JAPAN vol. 1997, no. 05, 30 May 1997 (1997-05-30) -& JP 09 023748 A (ISEKI & CO LTD), 28 January 1997 (1997-01-28)

## Description

The invention relates to a device for separating off parts of a plant branch hanging from a carrier, comprising a processing station having a unit which forms and assesses an image of a branch presented to it (a VISION unit) for determining the processing positions with respect to a reference and for supplying information which is representative of these positions to a cutting or snipping unit for successively separating off parts of the branch at two levels and then setting aside the part which has been separated off.

A device of this type is known from and described in the International application PCT/NL02/00226, in the name of the Applicant.

In this known device, which is intended in particular for separating off cuttings, a branch which is suspended from a carrier and is to be processed is moved into the viewing field of an electro-optical assessing and evaluation device (VISION device), which uses criteria which have previously been input into it to determine where the branch should be cut or snipped through in order to optimally obtain cuttings from it and which then supplies corresponding control commands to a processing robot provided with a snipping and setting-aside device.

In practice, this device works satisfactorily, but has the drawback that the length of the branches to be processed is limited to the height dimension of the VISION installation which assesses the branches.

It is an object of the invention to overcome this drawback. According to the invention, this object is achieved by virtue of the fact that the feed means for the carrier are designed to present a carrier with a branch suspended from it to the processing station at a first, high level and then to lower the position of the branch, in steps via intermediate phases, to a second, lower finishing level, wherein a section of the branch which is to be processed can be evaluated by the assessing unit successively in each intermediate phase.

The device is preferably such that in each intermediate phase of the movement of the carrier, the assessed section of the branch can be processed by the processing elements.

The result of these measures is that branches of any desired length, both long and short branches, are processed reliably and safely by the installation. Small branches, when presented to the VISION installation, will be moved quickly and in a controlled way to a low level which is such that they too can be assessed and processed reliably.

Furthermore, the invention relates to a complete installation for the processing of plant branches, provided with a device as described above, and designed in accordance with the invention with a first rotating conveyor track for branch carriers, located at a low level and having a first, long section and a second long section, which is connected to the first long section via a curved track and substantially parallel to the first long section, and by a second conveyor track, located at a high level and likewise having a first, long section and a second long section, connected to the first long section via a curved track and substantially parallel to the first long section, the vertical distance between the two tracks substantially corresponding to the distance between the high level and the low level at the processing station, and the second, long section of the first conveyor track being connected, via a rising transfer track, to the second, long section of the second conveyor track, this second long section interacting with one or more discharge tracks leading to one or more processing stations located there, each having at least one discharge track which is connected to the second long section of the first conveyor track, and having an entry station along the first long section of this first conveyor track for placing the branches which are to be processed in the respective branch carriers.

An installation of this type has the advantage of a compact design, the capacity of which can easily be matched to the demand for a higher capacity by the addition of a plurality of processing devices.

Preferred embodiments of an installation of this type and of a branch carrier which is preferably used in it form the subject matter of claims 4 - 7.

From these measures result in particular the advantage that the position which a branch adopts with respect to its carrier during processing is determined as early as when the branch is being introduced, and will therefore be optimal; the position of the branch with respect to the carrier then no longer changes while the processing operations on the branch are being carried out.

The invention is explained with reference to the drawing, in which:
Fig. 1 shows a diagrammatic side view of a device for separating off parts of a plant branch, specifically in accordance with the prior art as documented in PCT/NL02/00226 in the name of the Applicant;
Fig. 2 diagrammatically depicts the way in which the drawbacks of this prior art are overcome in accordance with the invention;
Fig. 3 shows a perspective of a complete installation according to the invention, as seen from the side on which the plant branches are being suspended in the carriers;
Fig. 4 shows a corresponding view of this installation, but now seen from the reverse side;
Figs, 5, 6 and 7 show perspective illustrations of a branch carrier in three different working positions thereof;
Fig. 8 shows a detailed view of the position in which plant branches which are to be processed are suspended in the installation;
Fig. 9 shows a perspective view of a points mechanism which controls the upward transportation of the branch carriers;
Fig. 10 shows a perspective view of a support arranged at a processing station;
Fig. 10A shows a perspective view of this support from below;
Fig. 11 shows a perspective view of a points mechanism which controls the transportation of the branch carriers to a processing station;
Fig. 12 shows a perspective view of a points mechanism which is used to introduce the carriers back into the conveyor track after treatment at a processing station.

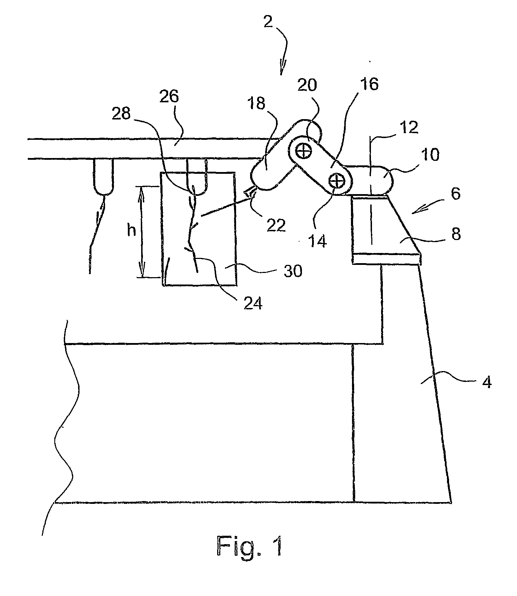

Fig. 1 shows the main components of a device for cutting off parts, in particular cuttings, from a plant branch, as is known from the abovementioned prior art. This processing station 2 comprises a supporting frame 4 on which there is arranged a processing robot 6 of a commercially available type. The housing 8 of this processing robot bears a first arm 10, which can rotate in a controlled manner about the vertical axis 12 and at the end has the horizontal pin 14, about which the second arm 16 can rotate in a controlled manner; a third arm 18 is supported, such that it can rotate in a controlled manner about the second horizontal pin 20, by this second arm 16. At the lower end, the arm 18 bears a separation mechanism 22 comprising a cutting mechanism for snipping through the branch 24 in a controlled manner and a clamping mechanism for securely clamping the snipped-off portion.

A branch 24 which is to be processed is fed along a conveyor track 26, suspended from a carrier 28, until it is in front of the illumination field 28 of an electro-optical assessment installation (known as "VISION installation"), in which an image of the branch is formed by means of an electro-optical sensor system - not shown in more detail in this figure - arranged in housings (not shown) and as such known from the prior art, and an assessment is carried out to determine where this branch should be cut through in order to separate cuttings. The processing robot 6 positions and controls the cutting and snipping mechanism on the basis of the control commands supplied by this electro-optical system, in such a manner that the cuttings are separated at the correct location, and then sets these cuttings aside, for example places them in pots.

An installation of this type has proven to work excellently in practice.

However, Fig. 1 also reveals the limitations of this installation which is known per se; the electro-optical assessment device has a viewing field whose height h is limited in practice. This means that branches which are longer than the dimension of the height h cannot be processed by this installation.

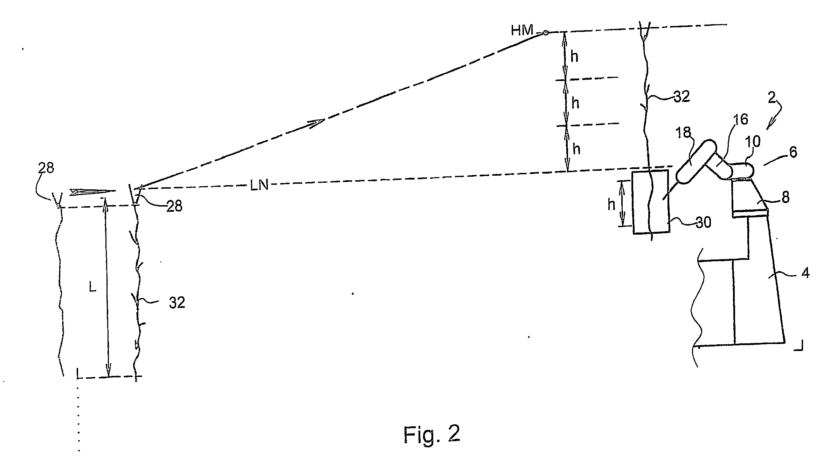

Fig. 2 shows on the hand of a schematical principal drawing how this drawback is overcome by means of measures according to the invention. In Fig. 2, dashed line LN indicates the level of the conveyor track 26 in Fig. 1 with respect to the processing installation 2. 32 denotes a long branch which is suspended from the carrier (for example a gripper) 28 and is of a length L which is at most equal to four times the height dimension h of the VISION installation 30. According to the invention, the carriers 28, each with a branch 32 suspended from them, and supplied via a conveyor track (not shown in Fig. 2), are before they are subjected to the processing operation in the processing station 2 at the low level LN, raised to a higher level, specifically the level indicated by the letters HN in Fig. 2, which is located roughly three times the height dimension h above the low level LN. The branches 32 are introduced into the processing station 2 at this high level and are then moved downwards in steps by the distance h, so that a section of the branch 32 with a length equal to the height dimension h is always positioned in front of the illumination field 30 of the assessment installation so that it can be assessed. Directly after this assessment, the desired parts (cuttings) can be separated from the branch 32 with the aid of the processing robot 6, in the manner which is known from the abovementioned prior art. Within the context of the invention, it is also possible for the entire branch to be first of all moved downwardly and assessed in steps, the results of the assessment being stored in a memory, whereafter the branch is raised once again to the high level HN and then moved downwards again in steps, the cuttings, which are to be separated, being separated in each stationary stage. In practice, it will be preferable for each assessed section of the branch 32 to be subjected to the processing operation involving separating the desired parts immediately after it has been assessed.

The operation of the electro-optical assessment installation and that of the processing robot with the separating components and the components which hold the separated branch portion in place is not explained in more detail here; rather, reference is made to publication PCT/NL/002266, of which the content which is of relevance in this context is hereby deemed to be incorporated by reference.

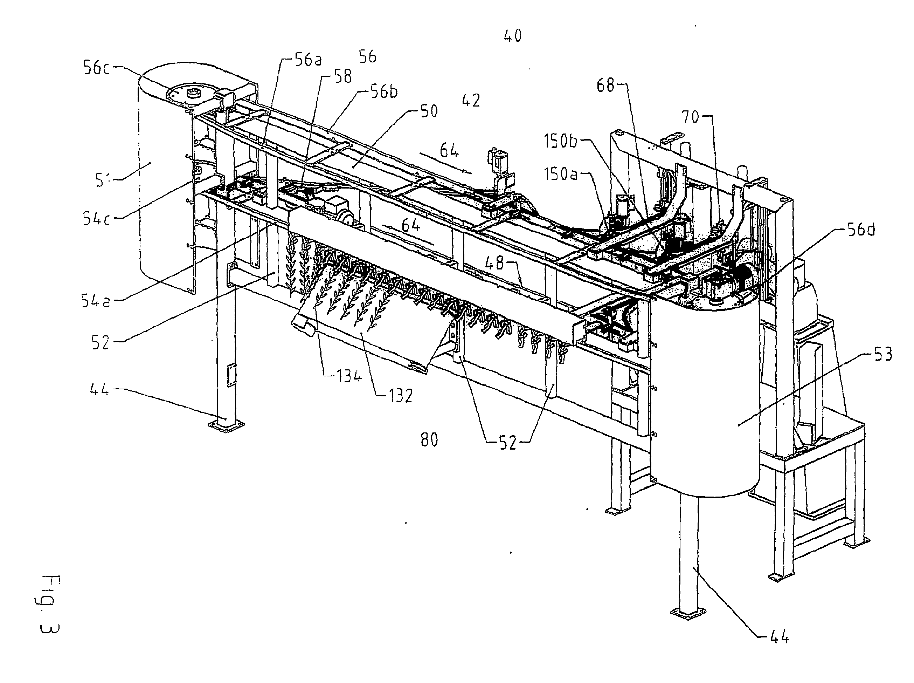

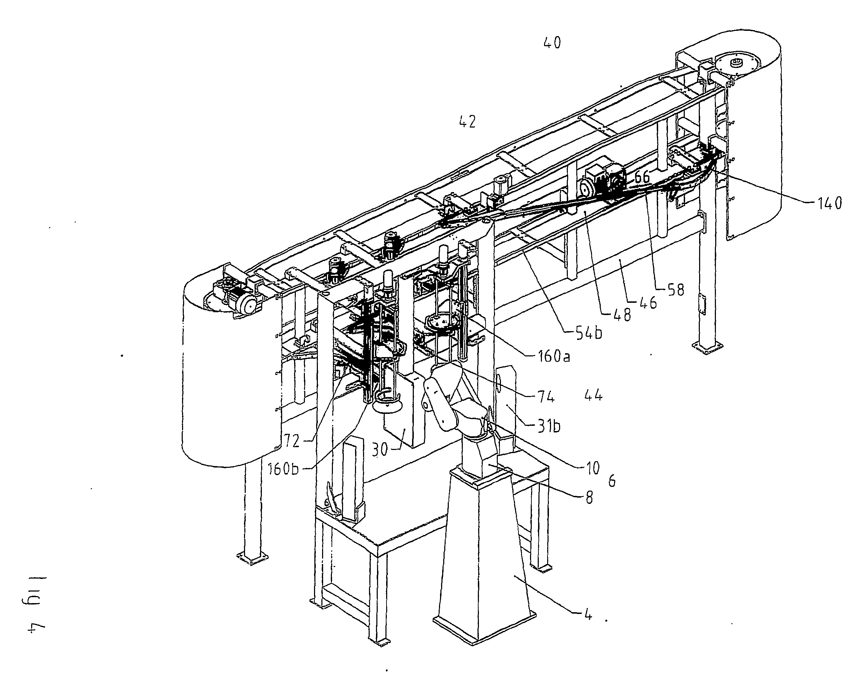

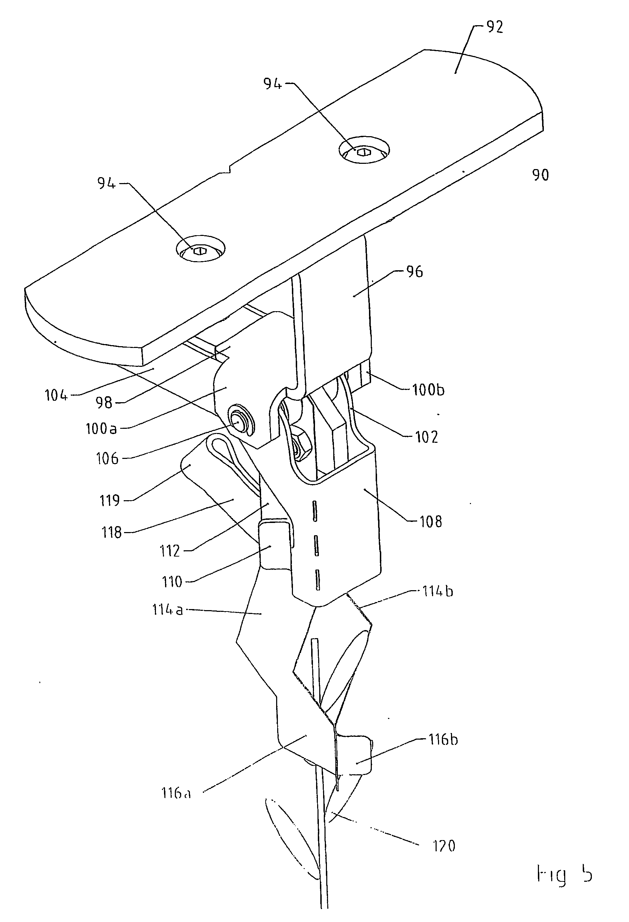

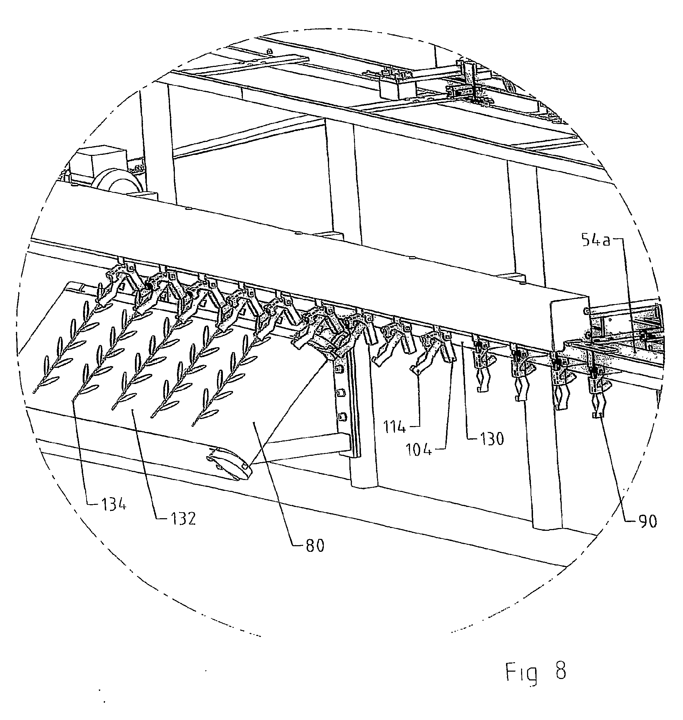

A complete installation for carrying out the processing operations described above is explained with reference to Figs. 3 and 4; a carrier for the branches which are to be processed that is preferably used here is described with reference to Figs. 5 to 7, while Figs. 8 to 12 show further details of the corresponding installation.

Fig. 3 shows a perspective view of a complete installation of this type, denoted by reference numeral 40, from the side on which the branches which are to be processed are suspended in the branch carriers (cf. Figs. 5 - 7), while Fig. 4 shows a view from the other, i.e. rear, side of the installation 40. The installation 40 comprises two main parts; a branch conveyor section 42 and at least one modular processing station 44 positioned on the rear side of the installation (cf. Fig. 4). The advantage of a structure of this type is that it is easy for a plurality of processing stations to be added as desired. The branch-conveying section 42 comprises a frame which rests on legs 44 and has a bottom longitudinal beam 46, a middle longitudinal beam 48 and an upper longitudinal beam 50, connected to one another by vertical columns 52. This results in a lightweight yet strong structure. The middle longitudinal beam 48 supports a first, lower conveyor track 54 having the two longitudinal parts 54a, 54b, which are connected to one another via a left-hand curved part 54c and a right-hand curved part 54d (not visible). Guard plates 51 and 53 protect the curved parts; the drives for the tracks are components which are known per se and are not explained in more detail. The upper longitudinal beam 50 bears an upper conveyor track 56 having a front longitudinal section 56a and a rear longitudinal section 56b, connected to one another via a left-hand curved unit 56c and a right-hand curved unit 56d. The conveyor tracks are the conventional roller tracks with which the person skilled in the art will be familiar; these tracks and their drives and supports are not described in more detail, for the sake of simplicity.

A rising track 58, which opens out into the upper conveyor track 56 half way along the rear part 56b thereof, starts beyond the left-hand reversing unit 54c of the lower conveyor track 54. The branch carriers move along the front track sections in the direction indicated by arrow 62 and along the rear track sections in the direction indicated by arrow 64; the direction along the raising track 58 is indicated by the arrow 66. (Cf. Fig. 4).

In the vicinity of the right-hand end of the installation, as seen in the figure, there is, as said, a processing station 44 having the components which have already been explained with reference to Figs. 1 and 2 and are denoted by identical reference numerals in the present figure; the processing robot 6 interacts with the VISION installation in the manner which is known from the prior art, processing in each case two branches which are located on either side of the illumination field 30.

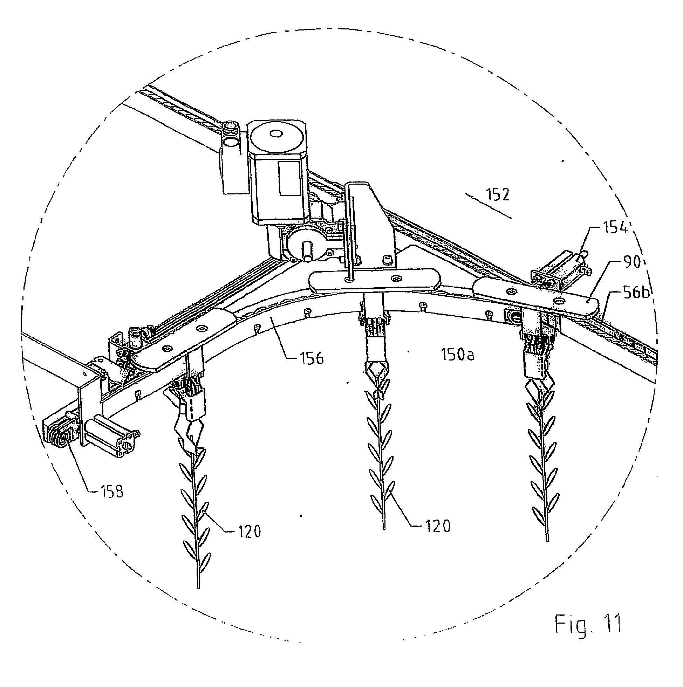

The branches which are to be processed are fed to these processing positions via two conveyor tracks 68, 70 which branch off from the rear conveyor track section 56; the points mechanism used for this purpose is explained in more detail with reference to Fig. 11. In the processing station, the branches are subjected to the processing operations described above, with the carriers being lowered in steps from the high level HN (Fig. 2) to the low level LN (Fig. 2), and the carriers then being discharged again to the low conveyor track 54 by means of two discharge conveyor tracks 72, 74 (Fig. 4).

The branches which are to be processed are suspended from the branch carriers advanced along the conveyor track at the location of a suspension table 80 arranged on the front side of the installation and shown in more detail in Fig. 8. One embodiment of possible carriers which can be combined with the installation is illustrated in Figs. 5 to 7 and will now be described for the first time.

A carrier of this type, which is denoted overall by reference numeral 90, comprises an elongate top plate 92, which on the underside bears two ball-shaped driving members 94, which are only partially visible in the figure, interacting with the driving elements of the conveyor tracks 54, 56 and 58. Furthermore, the top plate 92 bears a right-angled carrier strip 96, the flanged end 98 of which continues into the short side limbs 100a, 100b, between which there is enclosed a tilting arm 102 which is U-shaped in cross section and has a first arm 104 that serves to pivot the tilting arm in a controlled manner about the horizontal rotation pin 106 which connects the limbs 100a, 100b, and a second, open bracket 108, the limbs of which continue into the pressure-exerting lips 110 which are flanged towards one another.

These lips engage around the straight section 112 of the resilient pressure-exerting strips 114a, 114b, between the ends 116a, 116b of which a branch which is to be processed can be clamped. They can be moved away from one another in a controlled manner by means of a control cam 118 in plate form with a widened end 110 fixed to the inner side of the limb 108.

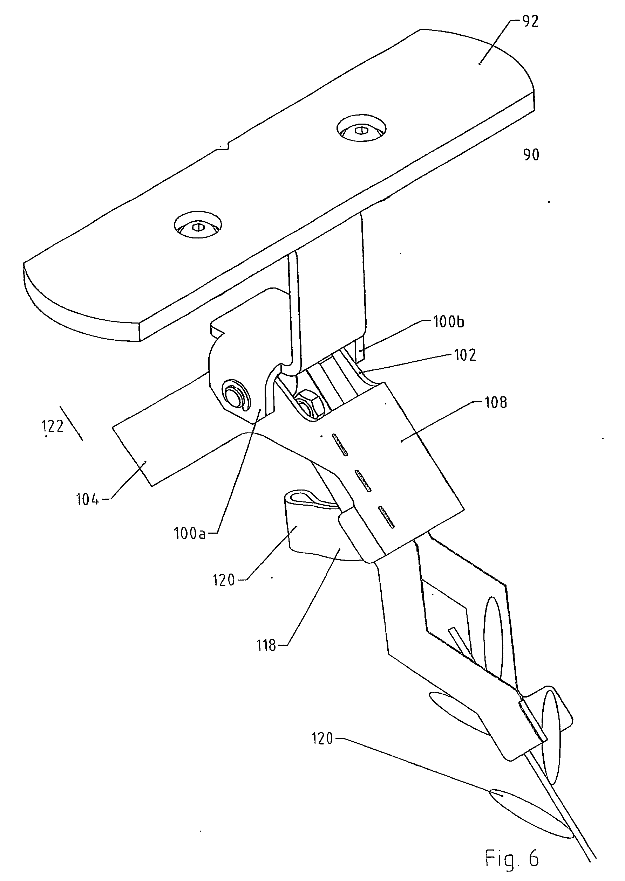

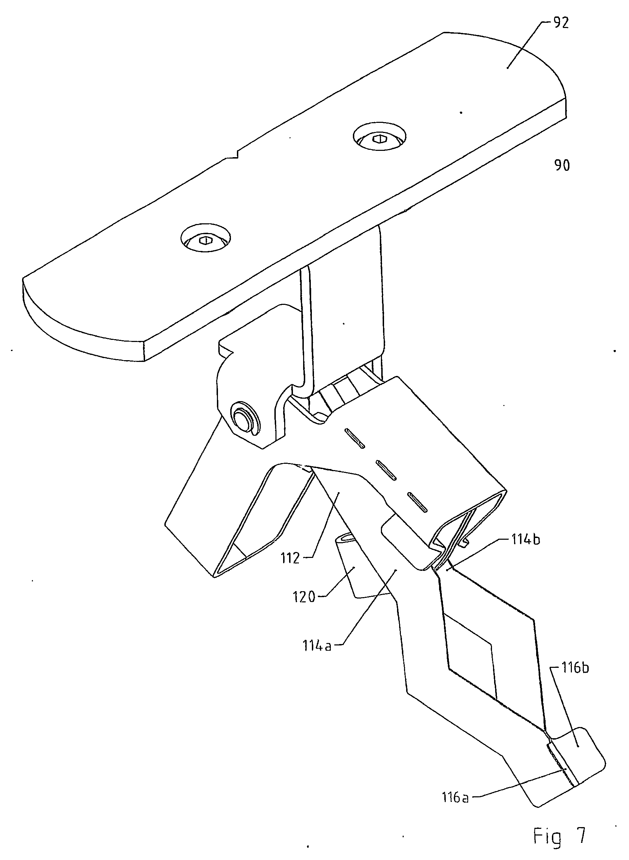

Fig. 5 shows the position in which a branch 120 is clamped in place between the ends 116a, 116b; Fig. 6 shows the situation in which the limb 104 has been tilted to the left, in the direction indicated by arrow 122, under the influence of a profiled and elongate actuating element (not shown) and in which the branch 120 still remains clamped between the ends 116a, 116b, while Fig. 7, finally, shows the situation which arises when the strip 112 has been rotated through the maximum possible distance to the right and the widened cam 119 penetrates between the strips 114a, 114b, thereby moving the ends 116a, 116b apart. In this position, a branch suspended from the carrier is released.

Fig. 8 shows how carriers 90, moving along the front part 54a of the lower conveyor track 54, reach the insertion table 80, and in the process are forced, by a guide 130 acting on the respective actuating arms 104 of the respective carriers, to adopt a position in which the clamping strips 114 are virtually parallel to the surface 132 of the insertion table 80. Then, branches 134 which are to be processed are inserted by operating staff (not shown) between the end pieces 116a, 116b, which then still have clamping action, of the carriers which are supplied in each instance. While the carriers are being transported along the table 80, it is preferable for the speed of the carriers to be lower, so that there is ample time to place the branches in the correct position and so that the branches will not be damaged as they slide along the table. When the carriers have moved past the insertion table 80, they tilt back into the position shown in Fig. 5 and are therefore suspended along the front part 54a of the lower conveyor track 54. This therefore represents the situation as indicated diagrammatically on the left-hand side of Fig. 2; they are suspended at the low level LN.

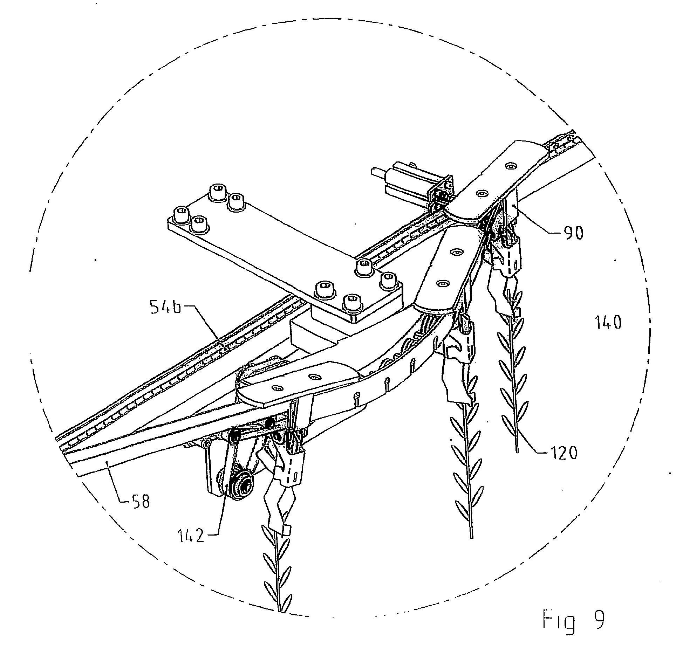

The respective carriers move past the curved section 54c and then arrive at the rear part 54b of the lower conveyor track 54. At that location, there is a controlled points mechanism 140 for transferring the carriers 90 with branches 120 to the rising track section 58 (cf. Fig. 9). It will be clear to the person skilled in the art that this points mechanism can be designed in any suitable way and that this points mechanism per se does not form the subject of the invention. It should merely be mentioned here that the rising track 58 is likewise a roller track having the drive 60 for it, which is diagrammatically indicated.

As has already been stated, the carriers with branches have to be fed to the processing station 6 when they have reached the rear track section 56b of the upper rotating conveyor track 56 via the rising track 58. For this purpose, two controlled points mechanisms 150a, 150b are incorporated in this track section 56; these points mechanisms are designed identically to one another, and Fig. 11 shows an example of this design; the points mechanism is denoted by 150a.

It is assumed in Fig. 11 that the carriers are supplied in the direction indicated by arrow 152, which direction corresponds to the direction of the arrow 64 in Fig. 3, i.e. in this figure running along the rear track section 56b, specifically from the left to the right, which in Fig. 11 corresponds to a movement from the right to the left in this drawing. The controlled ejector 154 (the way in which this is controlled obviously does not form the subject of the invention) causes the direction of a carrier supplied along the track 56b to change, so that it is transferred to the branch track 156, the end 158 of which is connected to one of the two processing positions, denoted by 160a, 160b in Fig. 4, of the processing station 6.

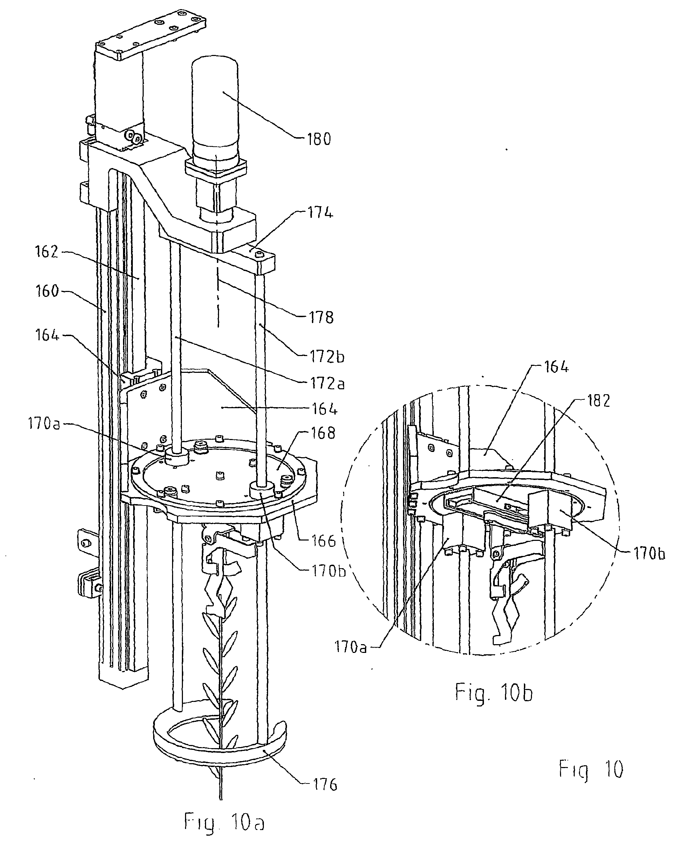

The prior art has already explained how a branch which is to be processed and is suspended from a carrier is rotated about its longitudinal axis in front of the cameras of the assessing VISION installation accommodated in the housings 31a, 31b. It is also known from this prior art how in each case one processing robot acts on two branches which are suspended on either side of the illumination unit of the VISION installation and are assessed by the latter. An arrangement of this type is used in this case too. According to the invention, the branches are moved and displaced with the aid of a device which is illustrated in Figs. 10A and 10B.

Fig. 10A shows a vertical upright 160 having a guide track 162, along which a sliding piece 164 with a dish-shaped support 166 secured to it at right angles for the carrying dish 168 supported therein such that it can rotate about a vertical axis, can move up and down under the influence of a controllable drive which is not shown or described in more detail. This dish 168 has two vertical guides 170a, 170b, through which pass the guide rods 172a, 172b, which at their top side are fixed to the yoke 174 and at the underside carry the branch guide ring 176, which is in the form of a part of a circle. The yoke 174 can be driven in a reciprocating rotary movement about the centre axis 178 by the drive 180. It will be clear from the above that the dish 178 can therefore execute both a controlled movement in the vertical direction and a controlled rotary movement about the centre axis 178.

On the underside of the dish there is a substantially U-shaped receiving means 182, the vertical limbs of which are flanged towards one another. The top plate 92 of a branch carrier 90 - cf. Fig. 6 - can be enclosed between them.

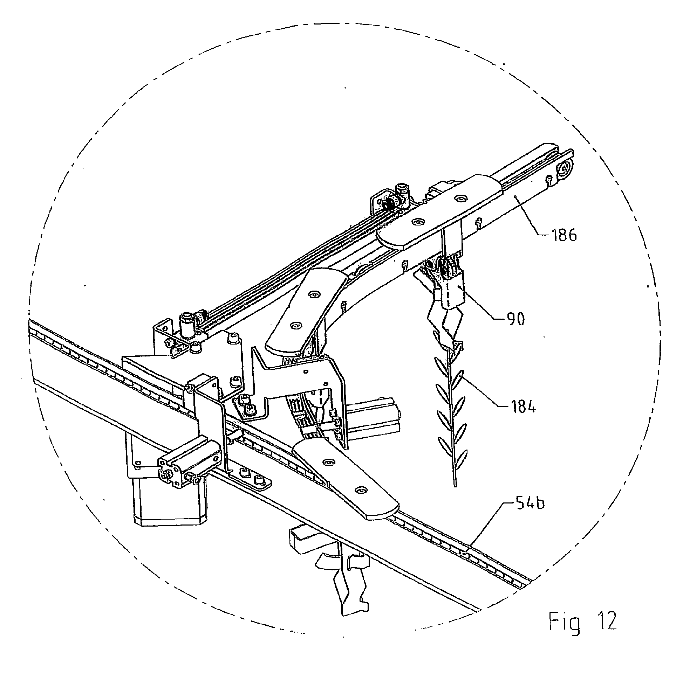

The assembly is now designed in such a manner that a branch carrier with a branch suspended from it, which reaches the end 158 of the track 156, can be slid into the receiving means 182, in which,it remains throughout the entire phase of assessing and processing the branch suspended from it, i.e. during the phased and rotational downward movement of the branch carrier from the high level (HN, Fig. 2) to the low level (LN, Fig. 2), with the processing operations on the branch being completed when this low level LN is reached. Via the tracks 72, 74 (cf. Fig. 4), the branch carrier, together with the remainder of the processed branch suspended from it, is reintroduced into the first, low track 54, and during the final phase of the movement of the branch carrier along this track, the arm 104 moves past an elongate control cam which causes this arm 104 to rotate into the position shown in Fig. 7, in which the control cam 120 presses the clamping strips 114a, 114b away from one another, and in this way releases the remainder of the branch. The transfer of a branch carrier 90 with the remainder of a branch suspended from it from a processing station to the first, low track 54 can be effected with the aid of an insertion points mechanism as diagrammatically depicted in Fig. 12; in that figure, the remainder of the branch is denoted by 184, and the section of track coming out of the processing station is denoted by 186.

The various track control elements are not explained in more detail, since they are known to the person skilled in the art of controlled conveying.

## Claims

1. Device for separating off parts of a plant branch (24) hanging from a carrier (28), comprising a processing station (2) having a unit which forms and assesses an image of a branch (24) presented to it (a VISION unit) for determining the processing positions with respect to a reference and for supplying information which is representative of these positions to a cutting or snipping unit for successively separating off parts of the branch (24) at two levels and then setting aside the part which has been separated off, **characterized in that** the feed means for the carrier (28) are designed to present a carrier (28) with a branch (24) suspended from it to the processing station at a first, high level and then to lower the position of the branch (24), in steps via intermediate phases, to a second, lower finishing level, wherein a section of the branch (24) which is to be processed can be evaluated by the assessing unit successively in each intermediate phase.

2. Device according to claim 1, **characterized in that** in each intermediate phase of the movement of the carrier (28), the assessed section of the branch (24) can be processed by the processing elements.

3. Installation for processing plant branches, **characterized by** a device according to claims 1 - 2, and by a first rotating conveyor track (54) for branch carriers, located at a low level and having a first, long section and a second long section, which is connected to the first long section via a curved track and substantially parallel to the first long section, and by a second conveyor track (56), located at a high level and likewise having a first, long section and a second long section, connected to the first long section via a curved track and substantially parallel to the first long section, the vertical distance between the two tracks substantially corresponding to the distance between the high level and the low level at the processing station, and the second, long section of the first conveyor track (54) being connected, via a rising transfer tracker (58) to the second, long section of the second conveyor track (56), this second long section interacting with one or more discharge tracks leading to one or more processing stations located there, each having at least one discharge track (72, 74) which is connected to the second long section of the first conveyor track (54), and having an entry station along the first long section of this first conveyor track (54) for placing the branches which are to be processed in the respective branch carriers.

4. Installation according to claim 3, **characterized in that** the second conveyor track (56), at the location of each processing station, comprises a controllable points mechanism (140), via which a branch carrier (90) can be transferred to a branch carrier support which can move up and down in a controlled manner along a vertical guide and can also be driven in a controlled rotary motion about a vertical axis in order to present a branch suspended from the carrier to the assessing and separating members of the processing station in question in a phased manner.

5. Installation according to claims 3 - 4, **characterized in that** the conveyor track (54, 56) comprises a roller track which is rotatingly driven and is held in an upwardly open U-shaped guide, each branch carrier (90), at the side of this track, being suspended from a driving member coupled to the rolls, while there above an elongate element is provided which can engage in a coupling element arranged on the underside of the carrier support which can move up and down.

6. Installation according to claims 3 - 5, **characterized in that** the branch carrier (90) comprises two clamping strips (114a, 114b) which are pressed resiliently against one another and are jointly held pivotably at one end in a right-angled holder, of which a first, U-shaped limb surrounds the strips and of which the second limb forms a stop interacting with elongate actuating stops disposed along the conveyor track, and having a spreading member which is located between the strips, starts from the inner side of the U-shaped limb, is provided with a thickened end portion and interacts with the clamping strips.

7. Installation according to claims 3 - 6, **characterized in that** in front of the first long section of the first conveyor track (54) there is a presentation table (80) which is disposed at an oblique angle with respect to the vertical and over which the clamping strips (114a, 114b) of the respective branch carriers (90) are guided in order for the branches which are to be processed to be introduced manually between them.

## Patentansprüche

1. Vorrichtung zum Abtrennen von Teilen von einem Pflanzenzweig (24), der von einem Träger (28) herabhängt, enthaltend eine Verarbeitungsstation (2), die eine Einheit hat, die eine Abbildung eines ihr dargestellten Zweiges (24) beurteilt (eine SICHT-Einheit), um die Verarbeitungspositionen im Bezug auf eine Referenz zu bestimmen und um Informationen, die für diese Positionen repräsentativ sind, einer Schneid- oder Schnippeinheit zuzuführen, um anschließend Teile des Zweiges (24) an zwei Ebenen abzutrennen und daraufhin den Teil beiseite zu legen, der abgetrennt wurde, **dadurch gekennzeichnet, dass** die Zuführeinrichtungen für den Träger (28) so beschaffen sind, dass sie einen Träger (28) mit einem Zweig (24), der von diesem herabhängt, der Verarbeitungsstation auf einer ersten hohen Ebene zuführen und anschließend die Position des Zweiges (24) in Schritten über Zwischenphasen auf eine zweite, niedrigere Endbearbeitungsebene absenken, wobei ein Abschnitt des Zweiges (24), der verarbeitet werden soll, durch die Bewertungseinheit nacheinander in jeder Zwischenphase beurteilt werden kann.

2. Vorrichtung nach Anspruch 1, **dadurch gekennzeichnet, dass** bei jeder Zwischenphase der Bewegung des Trägers (28) der beurteilte Abschnitt des Zweiges (24) von den Verarbeitungselementen verarbeitet werden kann.

3. Einrichtung für die Verarbeitung von Pflanzenzweigen, **gekennzeichnet durch** eine Vorrichtung nach Anspruch 1 bis 2 und **durch** eine erste umlaufende Förderbahn (54) für Zweigträger, die auf einer niedrigen Ebene angeordnet ist und einen ersten langen Abschnitt sowie einen zweiten langen Abschnitt hat, der mit dem ersten langen Abschnitt über eine kurvenförmige Bahn verbunden und im wesentlichen parallel zum ersten langen Abschnitt ist, und **durch** eine zweite Förderbahn (56), die auf einer hohen Ebene angeordnet ist und in ähnlicher Weise einen ersten langen Abschnitt sowie einen zweiten langen Abschnitt hat, der mit dem ersten langen Abschnitt über eine kurvenförmige Bahn verbunden und im wesentlichen parallel zum ersten langen Abschnitt ist, wobei der vertikale Abstand zwischen den beiden Bahnen im wesentlichen dem Abstand zwischen der hohen Ebene und der niedrigen Ebene an der Verarbeitungsstation entspricht und der zweite lange Abschnitt der ersten Förderbahn (54) über eine ansteigende Transferbahn (58) mit dem zweiten langen Abschnitt der zweiten Förderbahn (56) verbunden ist, wobei dieser zweite lange Abschnitt mit einer oder mehreren Ausgabebahnen zusammenarbeitet, die zu einer oder mehreren Verarbeitungsstationen führen, die sich dort befinden und jeweils wenigstens eine Ausgabebahn (72, 74) haben, die mit dem zweiten langen Abschnitt der ersten Förderbahn (54) verbunden ist und eine Eintrittsstation entlang des ersten langen Abschnittes dieser ersten Förderbahn (54) hat, um die Zweige, die verarbeitet werden sollen, in den entsprechenden Zweigträgern zu plazieren.

4. Einrichtung nach Anspruch 3, **dadurch gekennzeichnet, dass** die zweite Förderbahn (54) an der Stelle jeder Verarbeitungsstation einen steuerbaren Weichenmechanismus (140) enthält, über den ein Zweigträger (90) zu einer Zweigträgerhalterung überführt werden kann, die sich in gesteuerter Weise entlang einer vertikalen Führung nach oben und unten bewegen kann und zudem in einer gesteuerten Drehbewegung um eine vertikale Achse angetrieben werden kann, um einen Zweig, der vom Träger herabhängt, den Beurteilungs- und Abtrennelementen der in Frage kommenden Verarbeitungsstation schrittweise zuzuführen.

5. Einrichtung nach Anspruch 3 bis 4, **dadurch gekennzeichnet**, das die Förderbahn (54, 56) eine Rollenbahn enthält, die umlaufend angetrieben und in einer nach oben geöffneten U-förmigen Führung geführt ist, wobei jeder Zweigträger (90) an der Seite dieser Bahn von einem Antriebselement herabhängt, das mit den Rollen gekoppelt ist, während darüber ein längliches Element vorgesehen ist, das mit einem Kupplungselement in Eingriff gelangen kann, das auf der Unterseite der Trägerhalterung angeordnet ist und sich nach oben und unten bewegen kann.

6. Einrichtung nach Anspruch 3 bis 5, **dadurch gekennzeichnet, dass** der Zweigträger (90) zwei Klemmstreifen (114a, 114b) enthält, die federnd gegeneinander gepresst sind und gelenkig schwenkbar an einem Ende in einem rechtwinkligen Halter gehalten sind, von dem ein U-förmiges Glied die Streifen umgibt und von dem ein zweites Glied einen Anschlag bildet, der mit länglichen Betätigungsanschlägen zusammenwirkt, die entlang der Förderbahn angeordnet sind, und der ein Spreizelement aufweist, das sich zwischen den Streifen befindet, an der Innenseite der U-förmigen Gliedes beginnt und mit einem verdickte Endabschnitt versehen ist und mit den Klemmstreifen zusammenwirkt.

7. Einrichtung nach Anspruch 3 bis 6, **dadurch gekennzeichnet, dass** sich vor dem ersten langen Abschnitt der ersten Förderbahn (54) ein Auflagetisch (80) befindet, der in einem geneigten Winkel im Bezug auf die Vertikale angeordnet ist und über den die Klemmstreifen (114a, 114b) der jeweiligen Zweigträger (90) geführt sind, um die Zweige, die verarbeitet werden sollen, manuell zwischen diese einzuführen.

## Revendications

1. Dispositif de séparation de parties d'une branche de plante (24) suspendue à un dispositif de transport (28), comprenant un poste de traitement (2) ayant une unité formant et évaluant une image d'une branche (24) qui lui est présentée (une unité de VISION), pour déterminer les positions de traitement par rapport à une référence et pour fournir des informations représentatives de ces positions à une unité de coupe ou de taille, de manière à successivement séparer des parties de la branche (24) à deux niveaux et ensuite placer à part la partie ayant été séparée, **caractérisé en ce que** les moyens d'alimentation pour le dispositif de transport (28) sont conçus pour présenter un dispositif de transport (28), avec une branche (24) qui lui est suspendue, au poste de traitement, à un premier niveau élevé et, ensuite, abaisser la position de la branche (24), par étapes, via des phases intermédiaires, à un deuxième niveau de finition, inférieur, dans lequel une section de la branche (24) devant être traitée peut être évaluée par l'unité d'évaluation, successivement, à chaque phase intermédiaire.

2. Dispositif selon la revendication 1, **caractérisé en ce que**, dans chaque phase intermédiaire du déplacement du dispositif de transport (28), la section évaluée de la branche (24) peut être traitée par les éléments de traitement.

3. Installation pour traiter des branches de plante, **caractérisée par** un dispositif selon les revendications 1 à 2, et par une première piste de convoyeurs rotatifs (54) pour des dispositifs de transport de branche, situé à un niveau bas et ayant une première section longue et une deuxième section longue, reliée à la première section longue via une piste incurvée et sensiblement parallèle à la première section longue, et par une deuxième piste de convoyeur (56), située à un niveau haut et ayant, de même, une première section longue et une deuxième section longue, reliée à la première section longue via une piste incurvée et sensiblement parallèle à la première section longue, la distance verticale entre les deux pistes correspondant sensiblement à la distance entre le niveau haut et le niveau bas au poste de traitement, et la section longue de la première piste de convoyeur (54) étant connectée, via une piste de transfert (58) montante, à la deuxième section longue de la première piste de convoyeur (56), cette deuxième section longue interagissant avec une ou plusieurs pistes de décharge, menant à un ou plusieurs postes de traitement situés à cet emplacement, chacun ayant au moins une piste de décharge (72,74) reliée à la deuxième section longue de la première piste de convoyeur (54) et ayant un poste d'entrée le long de la première section longue de cette première piste de convoyeur (54), pour placer les branches qui doivent être traitées dans les dispositifs de transport de branche respectifs.

4. Installation selon la revendication 3, **caractérisée en ce que** la deuxième piste de convoyeur (56), à l'emplacement de chaque poste de traitement, comprend un mécanisme d'aiguillage (140), via lequel un dispositif de transport de branche (90) peut être transféré à un support de dispositif de transport de branche pouvant se déplacer en levée et en descente, de manière contrôlée, le long d'un guidage vertical, et pouvant être entraîné en un mouvement rotatif contrôlé autour d'un axe vertical, de manière à présenter une branche suspendue au dispositif de transport aux organes d'évaluation et de séparation du poste de traitement en question, de manière séquentielle.

5. Installation selon les revendications 3 à 4, **caractérisée en ce que** la piste de convoyeur (54, 56) comprend une piste à rouleaux, entraînée en rotation et maintenue dans un guide en forme de U ouvert en partie haute, chaque dispositif de transport de branche (90), sur le côté de cette piste, étant suspendu à un organe d'entraînement couplé aux rouleaux, tandis que, au-dessus, est prévu un élément allongé, pouvant venir en prise dans un élément de couplage, agencé en face inférieure du support de dispositif de transport pouvant effectuer un déplacement en levée et en descente.

6. Installation selon les revendications 3 à 5, **caractérisée en ce que** le dispositif de transport de branche (90) comprend deux bandes de serrage (114a, 114b), pressées élastiquement l'une contre l'autre et maintenues jointes de façon pivotante à une extrémité dans un organe de maintien à angle droit, dont un premier membre, en forme de U, entoure les bandes et dont le deuxième membre forme une butée, interagissant avec des butées d'actionnement allongées, disposées le long de la piste de convoyeur, et ayant un organe d'écartement qui est situé entre les bandes, part du côté intérieur de la branche en forme de U, est pourvu d'une partie d'extrémité épaissie, et interagit avec les bandes de serrage.

7. Installation selon les revendications 3 à 6, **caractérisée en ce que**, à l'avant de la première section longue de la première piste de convoyeur (54) est prévue une table de présentation (80), disposée sous un angle oblique par rapport à la verticale et par dessus laquelle les bandes de serrage (114a, 114b) des dispositifs de transport de branche (90) respectifs sont guidés, de manière que les branches qui doivent être traitées soient introduites manuellement entre elles.
